Europäisches Patentamt

European Patent Office

Office européen des brevets

(19)

(11) Veröffentlichungsnummer : **0 182 775**
B1

(12) **EUROPÄISCHE PATENTSCHRIFT**

(45) Veröffentlichungstag der Patentschrift :
30.08.89

(51) Int. Cl.⁴ : **C 21 B 13/00, C 21 B 13/14**

(21) Anmeldenummer : 85890278.6

(22) Anmeldetag : 11.11.85

(54) **Verfahren zur Herstellung von flüssigem Roheisen oder Stahlvorprodukten sowie Vorrichtung zur Durchführung des Verfahrens.**

(30) Priorität : 15.11.84 AT 3613/84

(43) Veröffentlichungstag der Anmeldung :
28.05.86 Patentblatt 86/22

(45) Bekanntmachung des Hinweises auf die Patenterteilung : 30.08.89 Patentblatt 89/35

(84) Benannte Vertragsstaaten :
BE DE FR GB IT LU NL SE

(56) Entgegenhaltungen :
EP–A– 0 037 809
EP–A– 0 111 176
EP–B– 0 010 627
DE–A– 3 345 106
DE–A– 3 441 985

(73) Patentinhaber : **VOEST-ALPINE INDUSTRIEANLA-GENBAU GESELLSCHAFT M.B.H.**
**Turmstrasse 44**
**A-4020 Linz (AT)**

**DEUTSCHE VOEST-ALPINE INDUSTRIEANLAGEN-BAU GMBH**
**Neusser Strasse 111**
**D-4000 Düsseldorf 1 (DE)**

(72) Erfinder : **Die Erfinder haben auf Ihre Nennung verzichtet**

(74) Vertreter : **Wolfram, Gustav, Dipl.-Ing.**
**Schwindgasse 7 P.O. Box 205**
**A-1041 Wien (AT)**

## Beschreibung

Die Erfindung betrifft ein Verfahren zur Herstellung von flüssigem Roheisen oder Stahlvorprodukten aus teilchenförmigem, eisenhaltigem Material, wie vorreduziertem Eisenschwamm, sowie zur Erzeugung von Reduktionsgas in einem Einschmelzvergaser, wobei durch Zugabe von Kohle mit einem $C_{fix}$-Gehalt von weniger als 80 % und durch Einblasen von sauerstoffhaltigem Gas ein Wirbelbett aus Kokspartikeln gebildet wird und aus dem Reduktionsgas abgeschiedene Kohle bzw. Koks enthaltende Feststoffteilchen zugeführt werden, sowie eine Vorrichtung zur Durchführung des Verfahrens.

Ein Verfahren dieser Art ist aus der DE-A-33 45 106 bekannt. Hierbei wird das sauerstoffhaltige Gas bzw. reiner Sauerstoff im unteren Bereich des Einschmelzvergasers eingeblasen und ein Wirbelbett aus Koksteilchen erzeugt. Das teilchenförmige eisenhaltige Material, insbesondere vorreduzierter Eisenschwamm, und die stückige Kohle werden durch Chargieröffnungen in der Haube des Einschmelzvergasers von oben zugeführt, die fallenden Teilchen werden im Wirbelbett abgebremst und die eisenhaltigen Teilchen werden während des Durchfallens durch das Koksfließbett reduziert und geschmolzen. Das aufgeschmolzene, von Schlacke bedeckte Metall sammelt sich am Boden des Einschmelzvergasers. Metall und Schlacke werden durch getrennte Abstichöffnungen abgezogen.

Gemäß der DE-A-33 45 106 werden die aus dem Reduktionsgas abgeschiedenen Feststoffteilchen über eine in Höhe des Wirbelbettes in den Einschmelzvergaser mündende Zuleitung zugeführt.

Die Temperatur des im Wirbelbett erzeugten Gases nimmt durch die zum Erhitzen und Schmelzen der Eisenschwammpartikel benötigte Wärme und verschiedene endotherme Reaktionen beim Erwärmen, Entwässern, Entgasen und Vergasen der eingebrachten Kohle nach oben zu ab. Der Wärmeverlust durch endotherme Reaktionen ist umso höher, je geringer der Kohlenstoffgehalt $C_{fix}$ der eingesetzten Kohle ist, d. h. je höher deren Feuchtigkeitsgehalt und Anteil an flüchtigen Bestandteilen ist. Wenn die Temperaturen am Kopf des Einschmelzvergasers unter 1 000 °C abfallen, ist die Gastemperatur nicht mehr ausreichend, um alle flüchtigen Bestandteile im Gas zur Gänze zu zerlegen, so daß in Bereichen niedrigerer Gastemperatur eine Kondensation teerhaltiger Bestandteile stattfindet. Die Abscheidung von Teer bringt jedoch erhebliche Schwierigkeiten in der Anlagentechnik und der Aufbereitung des zur Gasreinigung erforderlichen Wassers mit sich.

Aus der EP-A-0 111 176 ist ein Verfahren zum Einschmelzen von Eisenschwamm und Erzeugen eines Reduktionsgases bekannt, wobei aus dem Reduktionsgas abgeschiedene Feststoffteilchen mittels eines Brenners in der Ebene, in der das sauerstoffhältige Gas zur Bildung des Wirbelbettes eingeleitet wird, zugeführt werden.

Die Erfindung stellt sich die Aufgabe, eine zufriedenstellende Arbeitsweise des Einschmelzvergasers auch dann zu gewährleisten, wenn eine minderwertigere Kohle mit einem hohen Feuchtigkeitsgehalt und einem hohen Anteil an flüchtigen Bestandteilen eingesetzt wird, so z. B. billige und in großer Menge zur Verfügung stehende Braunkohle.

Diese Aufgabe wird erfindungsgemäß bei einem Verfahren der eingangs bezeichneten Art dadurch gelöst, daß die aus dem Reduktionsgas abgeschiedenen Feststoffteilchen mittels eines Treibgases in mindestens einen oberhalb des Wirbelbettes angeordneten Vergasungsbrenner eingeblasen und vergast und/oder verbrannt werden, so daß dem Einschmelzvergaser zusätzlich Wärme oberhalb des Wirbelbettes zugeführt wird.

Als Treibgas kann von Flugstaub befreites gekühltes Reduktionsgas, Gichtgas, anderes Brenngas oder auch Inertgas verwendet werden.

Vorteilhaft erfolgt die zusätzliche Wärmezuführung durch in mindestens zwei horizontalen Ebenen kranzförmig angeordnete, die Seitenwand des Einschmelzvergasers durchsetzende Brenner, u. zw. durch Brenner in einer Ebene im unteren Wirbelbettbereich und durch Brenner in einer Ebene knapp oberhalb des Wirbelbettes. Dazwischen, d. h. in Zwischenebenen, kann ebenfalls zusätzliche Wärme zugeführt werden.

Bevorzugt wird die zusätzliche Wärmezuführung in Abhängigkeit von der im Reduktionsrohgas gemessenen Temperatur geregelt, wobei zur relativen Erhöhung der Reduktionsrohgastemperatur die Beheizung durch Brenner in der oberen Wärmezuführungsebene und zur relativen Erniedrigung der Reduktionsrohgastemperatur die Beheizung durch Brenner in der unteren Wärmezuführungsebene erfolgt.

Die Erfindung umfaßt des weiteren eine Vorrichtung zur Durchführung des Verfahrens, mit einem feuerfest ausgekleideten Einschmelzvergaser, der Öffnungen für die Zugabe von Kohle und eisenhältigem Material, einen Schlacken- und Schmelzenabstich, sowie eine Ableitung für das erzeugte Reduktionsgas aufweist, die in einen Flugstaub aus dem Reduktionsgas abscheidenden Heißzyklon mündet, dessen abgeschiedener Flugstaub über eine Zuleitung in den Einschmelzvergaser rückgeführt wird, wobei ein unterer Abschnitt des Einschmelzvergasers zum Sammeln von schmelzflüssigem Material und flüssiger Schlacke, ein mit Zuführungsleitungen für sauerstoffhältiges Gas versehener mittlerer Abschnitt zur Aufnahme eines Kokswirbelbettes und ein oberer Abschnitt als Beruhigungsraum vorgesehen sind, welche Vorrichtung dadurch gekennzeichnet ist, daß im oberen Abschnitt mindestens ein Vergasungsbrenner angeordnet ist, welcher die Seitenwand des Einschmelzvergasers durchsetzt und an den die Zuleitungen für die aus dem Reduktionsgas abgeschiedenen, Kohle bzw. Koks enthaltenden Feststoffteilchen sowie Zuleitungen für Sauerstoff angeschlossen sind, wobei in die Feststoffteilchen-Zuleitungen Leitungen für Treibgas münden.

Zweckmäßig sind die Vergasungsbrenner in mindestens zwei übereinander liegenden horizontalen Ebenen kranzförmig angeordnet.

Die Brenner können zum Einbringen besonders hoher Energiemengen auch als Plasma- oder andere elektrische Brenner ausgebildet sein.

Bevorzugt sind die Brenner der übereinander angeordneten Brennerkränze mit einer im Reduktionsrohgas vorgesehenen Temperaturmeßeinrichtung und einem Regelkreis verbunden.

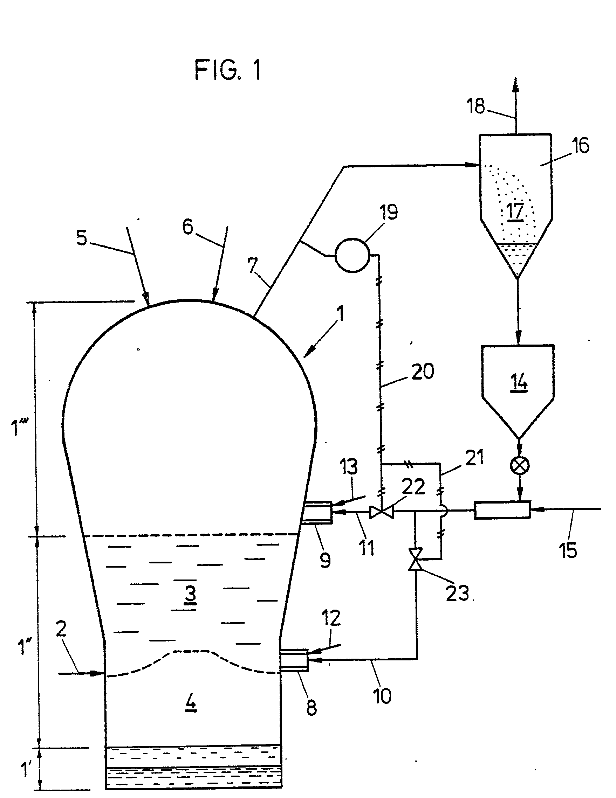

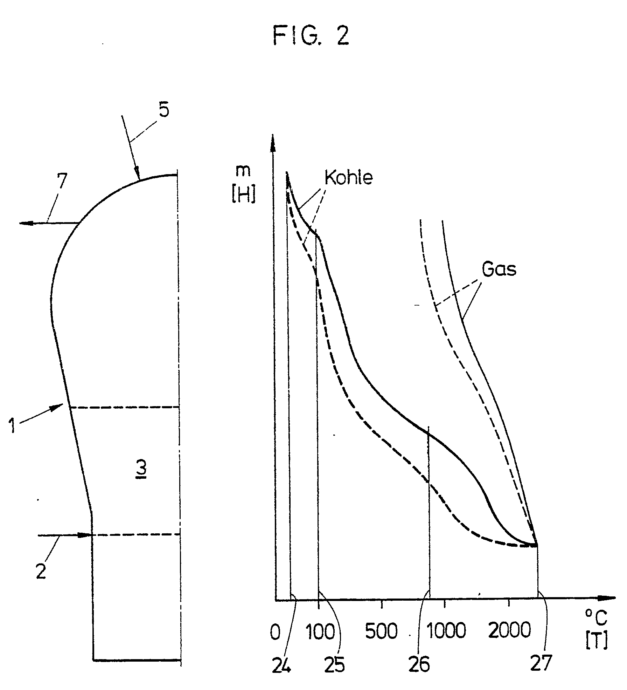

Das erfindungsgemäße Verfahren und die Vorrichtung zu seiner Durchführung sind in der Zeichnung näher erläutert. Fig. 1 zeigt schematisch einen Einschmelzvergaser mit den zugehörigen Hilfseinrichtungen im Aufriß, Fig. 2 gibt das Temperaturprofil in einem solchen Einschmelzvergaser wieder, wenn einerseits mit hochwertiger Kohle, andererseits mit minderwertigerer Kohle gearbeitet wird.

Mit 1 ist ein feuerfest ausgekleideter Einschmelzvergaser bezeichnet, der einen unteren Abschnitt 1′, einen mittleren Abschnitt 1″ und einen erweiterten oberen Abschnitt 1‴ aufweist. Der untere Abschnitt 1′ ist zur Aufnahme von schmelzflüssigem Metall und Schlacke bestimmt und mit einem Schmelzen- und Schlackenabstich ausgerüstet. Im mittleren Abschnitt 1″ sind Zuführungsleitungen 2 für Sauerstoff vorgesehen, mit denen ein Wirbelbett 3 aus Koksteilchen gebildet wird, welches über einem Festbett 4 aufrechterhalten wird. Der obere erweiterte Abschnitt 1‴ ist mit Zuführungen für stückige Kohle 5 und Eisenschwamm 6 versehen. Weiters ist im oberen Teil eine Ableitung 7 für das Reduktionsgas vorgesehen.

Oberhalb der Zuführungsleitungen 2 sind erfindungsgemäß Vergasungsbrenner in zwei übereinanderliegenden horizontalen Ebenen vorgesehen, wobei die Brenner jeweils kranzförmig über den Umfang des Einschmelzvergasers verteilt angeordnet sind. Es ist jeweils nur ein Brenner dargestellt. Die einzelnen Brenner 8 der unteren Ebene sind im unteren Bereich des Wirbelbettes angeordnet und die obere Ebene befindet sich knapp oberhalb des Wirbelbettes, wobei die Brenner mit 9 bezeichnet sind. Jeder Vergasungsbrenner hat eine Zuleitung für staubförmigen Brennstoff 10 bzw. 11 und für Sauerstoff 12 bzw. 13.

Die Brennstoffzuleitungen 10 und 11 stehen mit einem Vorratsbehälter 14 in Verbindung, wobei die Förderung des staubförmigen Brennstoffes mit Hilfe von aus der Leitung 15 zugeführtem Treibgas bewerkstelligt wird. Der Vorratsbehälter 14 wird aus dem mit 16 bezeichneten Heißzyklon beschickt; in diesen Heißzyklon wird Reduktionsrohgas aus der Ableitung 7 eingeleitet und von den Feststoffen, die hauptsächlich aus Kohleteilchen 17 bestehen, befreit. Das gereinigte Reduktionsgas wird über die Leitung 18 abgeführt und einem Direktreduktionsschachtofen zugeleitet.

Zwecks Regelung des Betriebs der Brenner 8 und 9 ist an die Ableitung 7 für das Reduktionsrohgas ein Temperaturmeßgerät 19 angeschlossen, welches elektrisch mit einem Regelkreis 20, 21 verbunden ist. Mit Hilfe dieses Regelkreises werden die Ventile 22, 23 in Abhängigkeit von der gemessenen Temperatur betätigt, wobei bei einer zu geringen Temperatur die Brenner 9 der oberen Ebene und bei einer zu hohen Temperatur die Brenner 8 der unteren Ebene beaufschlagt werden.

In Fig. 2 ist das Temperaturprofil über die Höhe des Einschmelzvergasers veranschaulicht, wobei auf der Ordinate die Höhenmeter und auf der Abszisse die Temperaturen eingetragen sind. Die voll ausgezogenen Linien geben den Temperaturverlauf der zugesetzten Kohle und des entstehenden Gases bei Verwendung von hochwertiger Kohle mit einem $C_{fix}$-Gehalt von etwa 80 %, einem Gehalt an flüchtigen Bestandteilen von 10 %, an Asche von 5 % und an Wasser von 5 % wieder, die strichlierten Kurven den Verlauf bei Verwendung von minderer Kohle mit einem $C_{fix}$-Gehalt von 50 %, einem Gehalt an flüchtigen Bestandteilen von 25 %, an Asche von 20 % und an Wasser von 5 %. Die vertikale Linie 24 veranschaulicht die Einsatztemperatur der Kohle, die vertikale Linie 25 die Temperatur nach erfolgter Entwässerung, die vertikale Linie 26 die Temperatur zu Beginn des Vergasens und die vertikale Linie 27 die Endtemperatur.

Es ist ersichtlich, daß durch das erfindungsgemäße Verfahren der Temperaturverlauf geringwertiger Kohlenstoffträger und des dabei erzeugten Gases an den Temperaturverlauf von Kohle bzw. Gas, wie er beim Einsatz hochwertiger Kohle resultiert, angeglichen werden kann.

**Patentansprüche**

1. Verfahren zur Herstellung von flüssigem Roheisen oder Stahlvorprodukten aus teilchenförmigem, eisenhaltigem Material, wie vorreduziertem Eisenschwamm, sowie zur Erzeugung von Reduktionsgas in einem Einschmelzvergaser (1), wobei durch zugabe von Kohle mit einem $C_{fix}$-Gehalt von weniger als 80 % und durch Einblasen von sauerstoffhaltigem Gas ein Wirbelbett (3) aus Kokspartikeln gebildet wird und aus dem Reduktionsgas abgeschiedene Kohle bzw. Koks enthaltende Feststoffteilchen zugeführt werden, dadurch gekennzeichnet, daß die aus dem Reduktionsgas abgeschiedenen Feststoffteilchen mittels eines Treibgases in mindestens einen oberhalb des Wirbelbettes (3) angeordneten Vergasungsbrenner (9) eingeblasen und vergast und/oder verbrannt werden, so daß dem Einschmelzvergaser zusätzlich Wärme oberhalb des Wirbelbettes (3) zugeführt wird.

2. Verfahren nach Anspruch 1, dadurch gekennzeichnet, daß die zusätzliche Wärmezuführung durch in mindestens zwei horizontalen Ebenen kranzförmig angeordnete, die Seitenwand des Einschmelzvergasers (1) durchsetzende Brenner erfolgt, u. zw. durch Brenner (8) in einer Ebene im unteren Wirbelbettbereich und durch Brenner (9) in einer Ebene knapp oberhalb des Wirbelbettes (3).

3. Verfahren nach Anspruch 2, dadurch gekennzeichnet, daß die zusätzliche Wärmezuführung in Abhängigkeit von der im Reduktionsrohgas gemessenen Temperatur geregelt wird, wobei zur relativen Erhöhung der Reduktionsrohgastemperatur die Beheizung durch Brenner (9) in der oberen Wärmezuführungsebene und zur relativen Erniedrigung der Reduktionsrohgastemperatur die Beheizung durch Brenner (8) in der unteren Wärmezuführungsebene erfolgt.

4. Vorrichtung zur Durchführung des Verfahrens nach einem der Ansprüche 1 bis 3, mit einem feuerfest ausgekleideten Einschmelzvergaser (1), der Öffnungen für die Zugabe von Kohle (5) und eisenhaltigem Material (6), einen Schlacken- und Schmelzenabstich, sowie eine Ableitung (7) für das erzeugte Reduktionsgas aufweist, die in einen Flugstaub aus dem Reduktionsgas abscheidenden Heißzyklon (16) mündet, dessen abgeschiedener Flugstaub über eine Zuleitung in den Einschmelzvergaser rückgeführt wird, wobei ein unterer Abschnitt (1') des Einschmelzvergasers zum Sammeln von schmelzflüssigem Material und flüssiger Schlacke, ein mit Zuführungsleitungen (2) für sauerstoffhaltiges Gas versehener mittlerer Abschnitt (1") zur Aufnahme eines Kokswirbelbettes und ein oberer Abschnitt (1"') als Beruhigungsraum vorgesehen sind, dadurch gekennzeichnet, daß im oberen Abschnitt (1"') mindestens ein Vergasungsbrenner (9) angeordnet ist, welcher die Seitenwand des Einschmelzvergasers durchsetzt und an den die Zuleitungen für die aus dem Reduktionsgas abgeschiedenen, Kohle bzw. Koks enthaltenden Feststoffteilchen sowie Zuleitungen für Sauerstoff (12, 13) angeschlossen sind, wobei in die Feststoffteilchen-Zuleitungen Leitungen (15) für Treibgas münden.

5. Vorrichtung nach Anspruch 4, dadurch gekennzeichnet, daß Vergasungsbrenner (8, 9) in mindestens zwei übereinander liegenden horizontalen Ebenen kranzförmig angeordnet sind.

6. Vorrichtung nach Anspruch 5, dadurch gekennzeichnet, daß die Vergasungsbrenner (8, 9) der übereinanderliegenden Brennerkränze mit einer im Reduktionsrohgas vorgesehenen Temperaturmeßeinrichtung (19) und einem Regelkreis (20, 21) verbunden sind.

## Claims

1. Process for the production of molten pig iron or steel pre-products from particulate ferrous material, such as pre-reduced iron sponge, as well as for the production of reducing gas in a meltdown gasifier (1), wherein a fluidised bed (3) of coke particles is formed by the addition of coal having a $C_{fix}$ content of less than 80 % and by blowing-in oxygen-containing gas and wherein coal- or coke-containing solid particles separated from the reducing gas are supplied, characterised in that the solid particles separated from the reducing gas, by means of a power gas, are blown into at least one gasifiying burner (9) arranged above the fluidised bed (3) and are gasified or burned, so that additional heat is supplied to the meltdown gasifier above the fluidised bed (3).

2. Process according to claim 1, characterised in that the additional heat supply is effected by burners coronally arranged in at least two horizontal planes and penetrating the side wall of the meltdown gasifier (1), i. e. by burners (8) arranged in a plane in the lower region of the fluidised bed and by burners (9) arranged in a plane closely above the fluidised bed (3).

3. Process according to claim 2, characterised in that the additional heat supply is controlled in dependence on the temperature measured in the reducing crude gas, wherein heating by burners (9) in the upper heat supply plane is effected to relatively increase the temperature of the reducing crude gas and heating by burners (8) in the lower heat supply plane is effected to relatively lower the temperature of the reducing crude gas.

4. Arrangement for carrying out the process according to any of claims 1 to 3, comprising a refractorily lined meltdown gasifier (1) including apertures for charging coal (5) and ferrous material (6), a slag and melt tapping means as well as a discharge duct (7) for the reducing gas produced, which runs into a hot cyclone (16) separating fine dust from the reducing gas, the fine dust separated being fed-back into the meltdown gasifier via a supply duct, a lower section (1') of the meltdown gasifier being provided to collect molten material and liquid slag, a central section (1") including feed lines (2) for oxygen-containing gas and being provided to accommodate a fluidised bed of coke, and an upper section (1"') being provided as killing space, characterised in that in the upper section (1"') at least one gasifying burner (9) is arranged, which penetrates the side wall of the meltdown gasifier and is equipped with supply ducts for the coal- or coke-containing solid particles separated from the reducing gas and supply ducts for oxygen (12, 13), ducts (15) for power gas running into the solid particle supply ducts.

5. Arrangement according to claim 4, characterised in that gasifying burners (8, 9) are coronally arranged in at least two superposed horizontal planes.

6. Arrangement according to claim 5, characterised in that the gasifying burners (8, 9) of the superposed burner rings are connected with a temperature measuring means (19) provided in the reducing crude gas and with a control loop (20, 21).

## Revendications

1. Procédé pour fabriquer de la fonte liquide ou des préproduits de l'acier à partir d'un matériau en forme de particules, contenant du fer, comme de l'éponge de fer préréduite, ainsi que pour produire un gaz de réduction dans un gazéificateur par première fusion (1), procédé dans lequel, par addition de charbon d'une teneur

en carbone $C_{fix}$ inférieure à 80 % et par soufflage d'un gaz contenant de l'oxygène, on forme un lit tourbillonnaire (3) de particules de coke et on amène des particules solides, contenant du charbon ou du coke, obtenues par séparation d'avec le gaz de réduction, caractérisé en ce que l'on souffle les particules solides obtenues par séparation à partir du gaz de réduction, au moyen d'un gaz moteur, dans au moins un brûleur de gazéification (9) disposé au-dessus du lit tourbillonnaire (3), et qu'on les gazéifie et/ou qu'on les brûle, de façon à amener au gazéificateur par première fusion un complément de chaleur au-dessus du lit tourbillonnaire (3).

2. Procédé selon la revendication 1, caractérisé en ce que l'amenée de chaleur complémentaire se fait par des brûleurs disposés en couronne dans au moins deux plans horizontaux et traversant la paroi latérale du gazéificateur par première fusion (1), et, de façon plus précise, par des brûleurs (8) disposés dans un plan situé dans la zone inférieure du lit tourbillonnaire et par des brûleurs (9) situés dans un plan situé juste au-dessus du lit tourbillonnaire (3).

3. Procédé selon la revendication 2, caractérisé en ce que l'on régule l'amenée de chaleur complémentaire en fonction de la température mesurée dans le gaz de réduction brut, étant précisé que pour une élévation relative de la température du gaz de réduction brut, le chauffage se fait par des brûleurs (9) situés dans le plan supérieur d'amenée de la chaleur et que pour un abaissement relatif de la température du gaz de réduction brut, le chauffage se fait par des brûleurs (8) situés dans le plan inférieur d'amenée de la chaleur.

4. Dispositif pour l'exécution du procédé selon l'une des revendications 1 à 3, comportant un gazéificateur par première fusion (1), à revêtement réfractaire, qui présente des ouvertures pour l'arrivée de charbon (5) et de matériau contenant du fer (6), un orifice de coulée pour le laitier et pour le bain de fusion, ainsi que, pour le gaz de réduction produit, une conduite d'évacuation (7) qui débouche dans un cyclone chaud (16) qui sépare la poussière volante d'avec le gaz de réduction et dont la poussière volante, séparée, est ramenée par une conduite dans le gazéificateur par première fusion, étant précisé que sont prévues une première portion (1') du gazéificateur par première fusion pour recevoir le matériau liquide du bain de fusion et le laitier liquide, une portion médiane (1''), munie de conduites d'arrivée (2) pour le gaz contenant de l'oxygène, pour recevoir un lit tourbillonnaire de coke, et une portion supérieure (1''') comme espace de calmage, caractérisé en ce que dans la portion supérieure (1''') est disposé au moins un brûleur de gazéification (9) qui traverse la paroi latérale du gazéificateur par première fusion et auxquelles sont raccordées les conduites d'arrivée pour les particules solides obtenues par séparation d'avec le gaz de réduction et contenant du charbon ou du coke ainsi que les conduites d'arrivée pour l'oxygène (12, 13), étant précisé que des conduites (15) pour le gaz moteur débouchent dans les conduites d'arrivée des particules solides.

5. Dispositif selon la revendication 4, caractérisé en ce que des brûleurs de gazéification (8, 9) sont disposés en couronne dans au moins deux plans horizontaux situés l'un au-dessus de l'autre.

6. Dispositif selon la revendication 5, caractérisé en ce que les brûleurs de gazéification (8, 9) de la couronne de brûleurs situés par-dessus sont reliés à un appareil de mesure de la température (19) prévu dans le gaz de réduction brut et à un circuit de régulation (20, 21).

FIG. 1

FIG. 2